# EUROPEAN PATENT SPECIFICATION

(11) **EP 1 213 940 B1**
(45) Date of publication and mention of the grant of the patent: **18.10.2006**
(21) Application number: 00403456.7
(22) Date of filing: 08.12.2000
(51) Int. Cl.: H04Q 7/38

(54) **Channel allocation in a communication system**
Kanalzuweisung in einem Kommunikationssystem
Allocation de canal dans un systeme de communication

(43) Date of publication of application: 12.06.2002
(60) Divisional application: 04100717.0
(73) Proprietor: MOTOROLA, INC., Schaumburg, IL 60196 (US)
(72) Inventor: Fouilland, Pascal, 31170 Tournefeuille (FR); Abdesselem, Ouelid, 31000 Toulouse (FR)
(74) Representative: Cross, Rupert Edward Blount

(56) References cited:
- WO-A-00/74274
- WO-A-99/14975
- US-A- 5 577 047
- US-A- 5 926 755
- LIN Y -B ET AL: "THE SUB-RATING CHANNEL ASSIGNMENT STRATEGY FOR PCS HAND-OFFS" IEEE TRANSACTIONS ON VEHICULAR TECHNOLOGY,US,IEEE INC. NEW YORK, vol. 45, no. 1, 1 February 1996 (1996-02-01), pages 122-130, XP000594674 ISSN: 0018-9545

## Description

This application relates to channel allocation in a TDMA communication system. The invention also relates to a communication device and a communications network using the new channel allocation and to a method of receiving channels in a communication device of a communication system.

In known and currently proposed communication systems a plurality of base stations are provided, each base station being able to communicate with mobile stations within range of the base station to provide communication services to those mobile stations.

Each communication system is allocated only a finite amount of spectrum with which to provide communication services to mobile stations. One common method of maximising the number of users the system can support is to split the available frequency spectrum into a number of different frequency carriers, and to allow different users to use the same frequency carrier at different times (so-called Time Division Multiple Access or TDMA systems).

In TDMA systems such as the well-known GSM (Global System for Mobile communications) or EDGE (Enhanced Data rates for GSM Evolution) systems, each frequency carrier carries a multi-frame comprising a number of frames divided into timeslots. In the GSM system, for example, a multi-frame comprises 51 frames, each having 8 timeslots, whereas in the EDGE system a multi-frame comprises 52 frames, each having 8 timeslots. Logic or traffic channels between a mobile station and a base station are provided by a sequence of timeslots on the same or different frequency carriers. The changing of frequency used by the channel is called frequency-hopping. A base station allocating a channel to a mobile station will inform the mobile station of the frequency law and timeslot allocation for the channel.

Typically, both the timeslot and frequency carrier will change during the sequence to reduce the impact of interference on the channel and therefore maximise the quality of the communication link. However, it is desirable to improve still further the ability of a TDMA communication system to ensure an adequate communication link quality.

It is sometimes necessary to handover a mobile station from one base station to another. If a handover of a mobile station is required when a call is ongoing, the traffic channel and associated signalling must be transferred from the original serving base station to the new target base station such that no data is lost and the handover is transparent and seamless from the point of view of the user.

In the existing GSM system, when the need for a handover is detected, the traffic channel and associated signalling are transferred from the original base station to the target base station. However, even with efficient signalling some of the traffic data may be lost during the handover. In addition if the mobile station is unable to establish the new channel with the target base station, the mobile station must re-establish a channel with the previously serving cell. During the delay to re-establish the channel traffic data will be lost, and in the worst case the call will be terminated as a result of a failed handover. This is clearly highly undesirable and so a robust handover mechanism, which is relatively simple to implement in the base station and in the mobile station of a TDMA communication system, is required.

PCT patent application no. WO 99 14975 discloses a channel structure for a communication system having two sets of physical channels: one for the forward link and another for the reverse link.

As is well known, adverse channel conditions introduce errors into the data received on the radio interface of a wireless communication system. Various mechanisms are employed to minimise the impact of these errors on the integrity of the data. However, it is desirable to provide a new way of improving the correction of errors in data received on the radio interface of a wireless communication system.

In accordance with a first aspect of the present invention, there is provided a method of operation of a communication device in a communication system as recited in claim 1 of the accompanying claims.

In accordance with a second aspect of the present invention, there is provided a control means in a communications system, as recited in claim 7 of the accompanying claims.

Most preferably, the secondary channel carries traffic data only.

The communications system may contain a network including first and second tranceiver means wherein the control means controls communication with the communications device using the TDMA partial rate primary channel via the first tranceiver means and the control means controls communication with the communications device using the TDMA partial rate secondary channel via the second tranceiver means.

The use of two partial rate TDMA channels provides channel diversity within a TDMA system. The secondary channel can use a different set of frequencies for its frequency hopping sequence and can also use different timeslots. This diversity has the advantage that if one partial rate channel is badly affected by interference, the other partial rate channel is likely to be unaffected and thus the link between the mobile station and the network is maintained.

When the same information data is transmitted on both of the channels, the use of the two channels between the network and the mobile station maximises the likelihood that the data will get through and not be lost owing to fading or other loss in a channel. If different puncturing and coding schemes for the same information data are used, error correction of the received information is facilitated. This is particularly valuable for error correction in the mobile station of downlink primary and secondary channels.

The primary and secondary channels may be set up between the mobile station and a single base station. In this case, the first transceiver means and second tranceiver means in accordance with the second aspect of the invention are first and second tranceivers of a Base Tranceiver Station (BTS) and the control means is the associated Base Station Controller (BSC).

In addition to the advantages described above resulting from frequency or channel diversity, the use of two partial rate channels between the mobile station and a base station provides the base station with greater flexibility when making channel allocations. In particular, since the partial rate channels are separately assignable, the base station can re-assign one of the channels independently from the other.

Alternatively the two channels may be set up between the mobile station and a single base station and a relay transmitter under the control of the single base station. This arrangement is effectively identical to the situation in which the primary and secondary channels are set up between the mobile station and a single base station, but also provides space diversity by virtue of the separation between the base station and the relay. If therefore one of the channels suffers interference or fade, for example as a result of a bus moving between the mobile station and either the relay or the base station, the separation between the base station and the relay means that the other channel is unlikely to suffer interference or fading at the same time.

Additionally, the primary and secondary channels may be set up between the mobile station and each of two different base stations. This arrangement also provides space diversity in addition to the frequency diversity as outlined above.

In the second aspect of the invention, the first transceiver means and second tranceiver means may be first and second BTSs and the control means may be the BSC associated with the first BTS. If the second BTS has a second BSC associated therewith the BSC associated with the first BTS may exchange signalling information with the second BTS via the BSC associated with the second BTS.

In a particularly advantageous embodiment, the two different base stations may be at different levels in a hierarchical system arrangement.

Preferably, the partial rate primary and secondary channels are complementary sub-channels. The partial rate channels may be half rate channels or quarter rate channels. Clearly, if quarter rate channels are used, a third or a third and a fourth quarter rate channel may also be set up between the mobile station and one or more base stations.

Thus, for example, if two half rate channels using different sub-channel numbers are used, one channel will use all even frame numbers and the other channel will use all odd frame numbers. Thus, the mobile station can receive and transmit on both channels at the same time, by following the frequency and timeslot law allocation for the first channel on even frame numbers and following the frequency and timeslot law allocation for the second channel on odd frame numbers.

This arrangement is particularly advantageous because half-rate channels have been standardised and quarter rate channels are under standardisation. As a result the implementation of the partial rate channels using sub-channels such as half rate and quarter rate channels is simple.

In addition, the four frames carrying channel data relating to a single block of information data are now separated by frames carrying channel data relating to the other channel, instead of being sent in consecutive frames as would be conventional. As a result, additional protection is provided against errors in the decoded information data arising out of the corruption of adjacent frames on the radio interface.

It will be clear to a skilled person that it is also possible to provide partial rate channels in accordance with the invention by splitting the time division between the primary channel and the second channel differently. For example, instead of switching between the primary channel and the secondary channel on a per frame basis as described above, the mobile station might switch between the primary channel and the secondary channel on a per block (four frames) basis, a half-multiframe or a whole multiframe basis. Indeed, it should be noted that in principle the partial rate channels may carry an unequal amount of data.

In accordance with an embodiment of the present invention, there is provided a method of performing a handover of a communication device from a first base station to a second base station of a TDMA communications system, as recited in claim 3 of the accompanying claims.

Thus, this aspect of the invention provides an advantageous method for performing a handover in a TDMA communication system using the primary and secondary partial rate TDMA channels as outlined above. The handover method may be used both for inter-base station handover and for intra-base station handover.

During the handover, the same information data is sent on both the primary channel and the secondary channel established with the mobile station. The channel and space diversity, as outlined above, arising from the use of the primary and secondary channels during the handover results in an improved likelihood that the data will be received. In addition, since a traffic connection is maintained with both base stations while the signalling link is transferred during an inter-base station handover, the possibility that data is lost or the call is dropped is significantly reduced.

This is particularly advantageous for real-time traffic, typically voice, where delay is critical and no repetition mechanism is foreseen.

The present invention also provides a new signalling protocol and interface for use during handovers in accordance with the third aspect of the invention. In particular, a new interface between a first and a second BSC, the lur-g interface, which carries signalling and control information as well as data is defined. In addition, the signalling relating to the request and release of the secondary channel has been defined.

In accordance with a further embodiment of the invention, there is provided a method of operation of a communication device as recited in claim 5 of the accompanying claims.

The method in accordance with this aspect of the invention is particularly useful for combining information received by a mobile station from at least two different channels carrying the same information data. Although its use in a TDMA communication system with partial rate channels as outlined above is particularly advantageous, this aspect of the invention is not limited to such a system but is instead applicable to any communication system. In particular, this method is also applicable to Code Division Multiple Access (CDMA) communication systems, such as the proposed Universal Mobile Telecommunication System (UMTS).

For a better understanding of the present invention, and to show how it may be brought into effect, reference will now be made, by way of example, to the accompanying drawings, in which:
Figure 1a illustrates the data flow between the network and a mobile station in a first arrangement in accordance with an embodiment of the invention;
Figure 1b illustrates the data flow between the network and a mobile station in a second arrangement in accordance with an embodiment of the invention
Figure 2 illustrates the reception and decoding elements of an exemplary mobile station;
Figure 3 illustrates combination of received blocks on a first and second TDMA channel received at the mobile station;
Figure 4a is a diagramatic representation of an first alternative arrangement of the reception and decoding elements of an exemplary mobile station;
Figure 4b is a diagramatic representation of an second alternative arrangement of the reception and decoding elements of an exemplary mobile station;
Figure 5 illustrates a first timeslot allocation;
Figure 6 illustrates a second timeslot allocation;
Figure 7 illustrates a third timeslot allocation;
Figure 8 illustrates a fourth timeslot allocation;
Figure 9 shows a handover method in accordance with an exemplary embodiment of the invention;
Figure 10 illustrates signalling and traffic flow during handover in accordance with an embodiment of the invention;
Figure 11 illustrates signalling and traffic flow during an intra-base station handover; and
Figure 12 illustrates the application of the invention to a hierarchical cell arrangement.

The invention will now be described with reference to the accompanying drawings in which the same or similar parts have been given the same reference numerals.
Although described with reference to the GSM and EDGE systems, the described use of the primary and secondary channels and method of handover are applicable to any TDMA system. The soft combining at the mobile station is applicable to any communication system, but can advantageously be used in the described TDMA system.

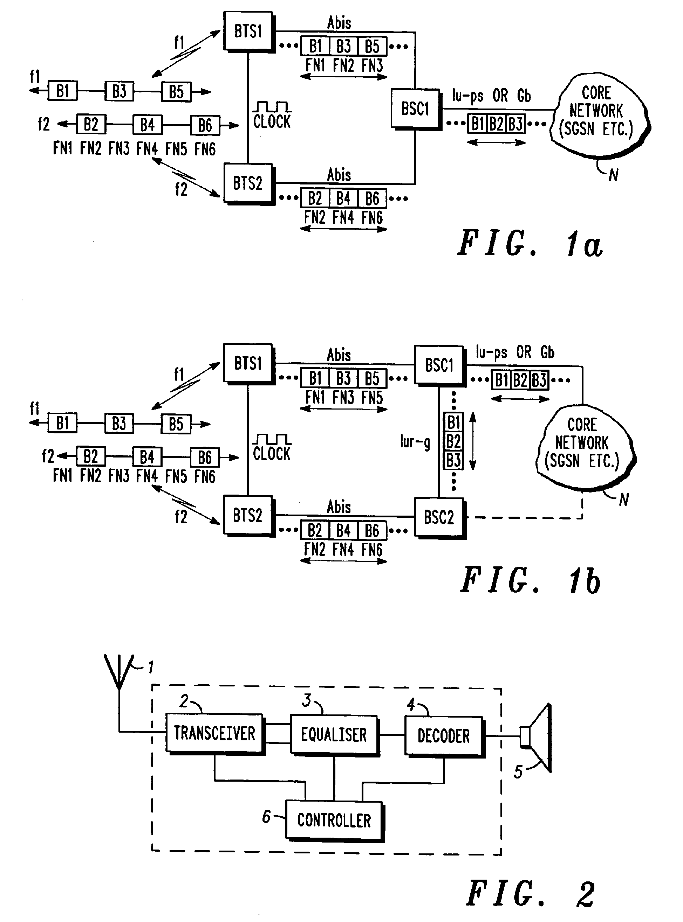

The data flow between the network and a mobile station when the primary and secondary partial rate channels in accordance with the first aspect of the invention are being used will be described with reference to Figures 1a and 1b. In the described advantageous exemplary embodiments the same information data is being transferred between the mobile station and the network on complementary half rate channels.

Figure 1a illustrates the data flow between the network and a mobile station when the two half rate channels are set up via first and second Base Transceiver Stations (BTS1 and BTS2) which share a Base Station Controller (BSC1). As is well known, the BSC1 communicates with a core network N over an lu-ps interface or Gb interface or over a circuit-switched interface such as an A interface or an lu-cs interface, and communicates with the BTS1 and the BTS2 over the Abis interface. The BTS1 and BTS2 are synchronised, as shown by the clock connection. BTS1 and BTS2 communicate with a mobile station (not shown) via a primary and a secondary channel f1 and f2, respectively.

Figure 1b illustrates the data flow between the network and a mobile station when the two complementary half rate channels are set up via first and second Base transceiver stations (BTS1 and BTS2) which do not share a common Base Station Controller (BSC). In this situation, the Base Station Controllers BSC1 and BSC2 respectively associated with the Base Transceiver Stations BTS1 and BTS2 are linked by an lur-g interface. Otherwise the arrangement is the same as that shown in Figure 1a.

As explained previously, in the illustrated embodiment the primary and the secondary channel f1 and f2 are complementary half rate channels. These channels have been set up as complementary half rate channels under the control of the primary BSC1, either directly (in the case of both f1 and f2 in Figure 1a as well as f1 in Figure 1 b), or indirectly (transparently via BSC2) in the case of Figure 1 b. As is clear from a consideration of Figures 1a and 1b, the complementary half rate channels f1 and f2 are allocated alternate frames of a multiframe.

Three information data blocks B1, B2 and B3 are shown for reference. As shown in Figures 1a and 1b, BSC1 receives information data blocks from, and transmits information data blocks to the core network N over the lu-ps or the Gb interface, or over a circuit-switched interface such as the A interface or the lu-cs interface. BSC1 sends the information data blocks to, or receives the information data blocks from BTS1 and BTS2. In the arrangement shown in Figure 1a, the information data blocks are transmitted directly across the respective Abis interface. In the arrangement shown in Figure 1b the information data blocks to or from BTS1 are transmitted across the Abis interface and the information data blocks to or from BTS2 are transmitted transparently by the BSC2 across the Abis and the lur-g interfaces.

For downlink data BTS1 and BTS2 perform channel coding and any puncturing that is being applied, in accordance with conventional techniques that will be known to a skilled person, before transmitting the resulting channel information on the half rate sub-channels f1 and f2, respectively. Although, as described above, the same information data block is transmitted to the mobile station via channel f1 and via channel f2, different puncturing schemes and/or coding schemes may be used in the two channels. This difference in the channel data actually transferred on the two channels can provide additional information which can be used to correct errors in the received data.

For uplink data the channel data received at BTS1 and BTS2 on channels f1 and f2 respectively is decoded and the resulting information data is passed to BSC1 (over the Abis interface or transparently through the BSC2 via the Abis and lur-g interface) and then on to the network N. Since one or other of the channels f1 and f2 may suffer from interference from time to time, the BSC1 can use the data from the other channel to ensure faithful transfer of the data.

In the described embodiment the radio blocks are synchronised on a frame number basis as the channels can be received more easily. However, this is not essential to synchronise the radio blocks in this way.

Of course, it would also be possible to transmit alternate blocks on each of the two complementary sub-channels f1 and f2. Clearly, this would double the capacity of the link to the mobile station compared with the embodiment described above, although at the expense of the robustness provided by the above-described method.

Although the mobile station has two channels established only one of the channels carries associated signalling or control information. As a result, the mobile station can only receive power control information from, and report power measurements to, the base station with which a signalling link is established. This would mean that in the event that there is a significant difference between the reception paths from the two cells, the mobile station would receive data blocks from only the serving cell, with which a signalling link is established.

In a similar way, the timing advance is controlled by the serving cell base station. Since the two cells are synchronised, the mobile station is able to evaluate the timing difference between them by monitoring the delay between the downlink paths. The mobile station can use this information to calculate the timing advance to be used towards the other BTS.

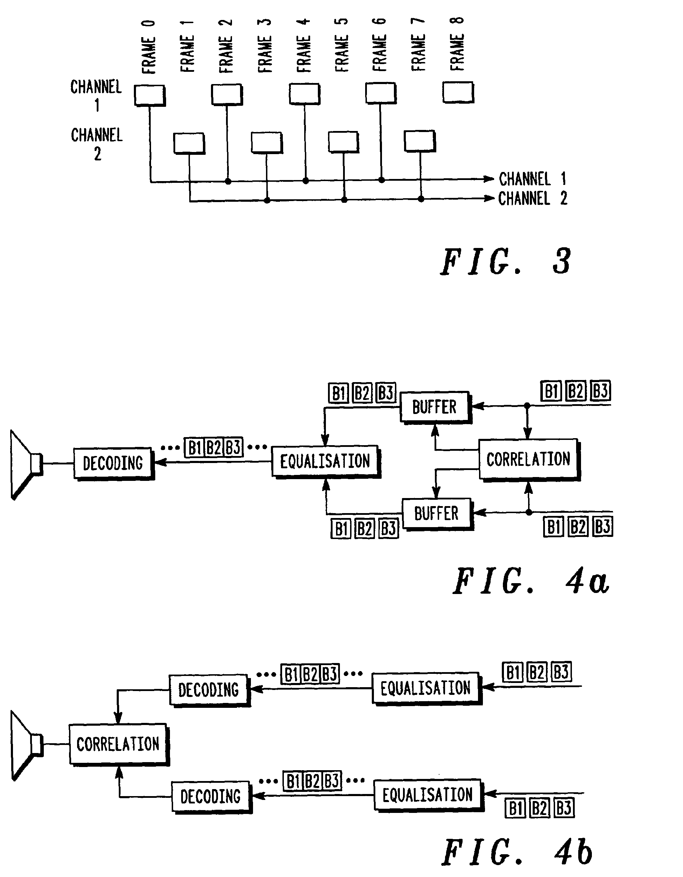

The operation of the mobile station when receiving two channels carrying the same information data, in accordance with an embodiment of the present invention, will now be described with reference to Figure 2, which shows the reception and decoding elements of a mobile station.

The reception and decoding elements of the mobile station shown in Figure 2 has an antenna 1 for receiving signals from a communication network. The antenna 1 is connected to a transceiver 2. The receive portion of the transceiver 2 is coupled to an equaliser 3, which in turn is coupled to a decoder 4. The output of the decoder is then output 5 for use by the mobile station, for example to be output as speech. A controller 6 controls the operation of the reception and decoding elements of the mobile station. Parts which are not relevant to the description of the invention have been omitted, as these will be clear to a skilled person.

In order for the mobile station to receive a first and a second channel, the controller 6 controls the transceiver to receive first and second channel data on the first and the second channel respectively. The first and second channel data is passed to the equaliser 3 which channel decodes the received channel data and soft combines the resulting symbols.

For soft combining of the received data an indication of the reliability of the decoded data is provided as well as the data itself. As the mobile station is receiving the same data via the two channels, the more reliable data can be retained and the less reliable data can be discarded. The use of different puncturing schemes for the two channels will result in the reception in the mobile of two different channel data sets corresponding to the same information data, and this additional information may further assist decoding and error correction in the mobile.

The implementation of this aspect of the invention in a TDMA communication system, for example in which complementary half rate channels in accordance with the described exemplary embodiment are used, is particularly advantageous, as is illustrated Figure 3.

If the transmitted radio blocks are not synchronised on a block by block basis, it is necessary for the mobile station to correlate the radio blocks received on the different channels. This correlation can be performed before the equalisation, in order to perform soft combining, or after voice decoding. These arrangements are shown in Figures 4a and 4b.

In order to avoid a requirement for two transceivers in the mobile station, the timeslot (TS) allocations for the complementary sub-channels f1 and f2 should enable the mobile station to alter its uplink and downlink timeslot allocation from frame to frame so as to receive and transmit on both sub-channels. As will be known to a person skilled in the art, the timeslot combinations which can be used by a mobile station depend on the multislot class of the mobile station, since the multislot parameters (Tta, Ttb, Tra, and Trb) associated with the multi-slot class must be adhered to in order to enable the mobile station to move its time reference between adjacent frames.

The available channel allocations for cell 1 and cell 2 are:
for multislot class 1, the same timeslot N shall be used
for multislot classes 2-7, timeslot N or N+/-1 shall be used
for multislot classes 8-11, timeslot N, N+/-1 or N+/-2 shall be used
for multislot class 12, timeslot N, N+/-1, N+/-2 or N+/-3 shall be used.

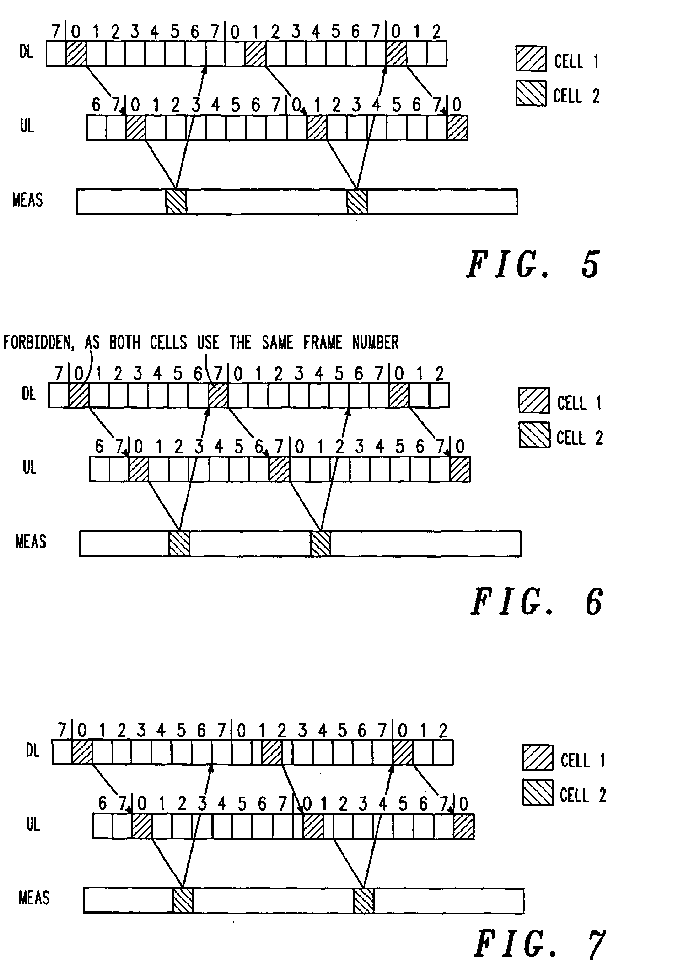

For example, a multislot class 2 mobile station (ie capable of a maximum of 2 Rx channels and one Tx channel) might have timeslot TS0 allocated on cell 1 and timeslot TS1 allocated on cell 2, as shown in Figure 5.

However, it should be noted that the timeslot allocation possibilities are limited by the requirement that the timeslots relating to the channel allocated in cell 1 must always be in a different frame from the timeslots relating to the channel allocated in cell 2. Thus an allocation such as that shown in Figure 6, which would otherwise satisfy the allocation requirement as set out above, is impermissible.

It should be noted that the difference on the timing advance to be used on the target cell and the serving cell does not impact the Tra parameter (ie the time to perform measurements and be ready to receive, as is clear from Figure 7).

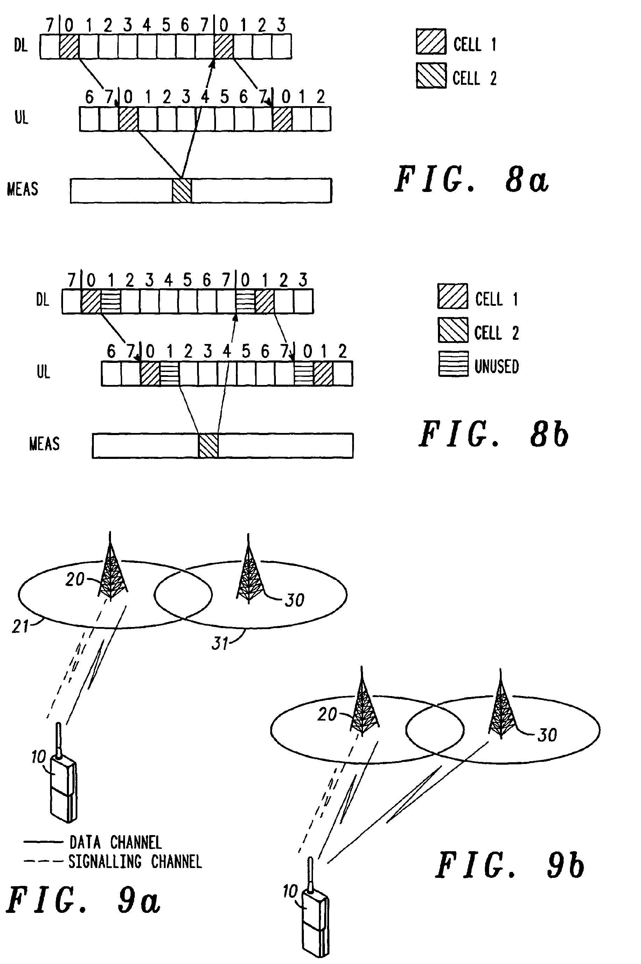

Alternatively, timeslots can be allocated with the same constraints as if they were both allocated to a single cell. Thus, a mobile station supporting 1 Tx slot (multislot class 1-4) shall have the same TS allocated on both cells. An example for a multi-slot class 1 mobile is shown in Figure 8a. A multislot class 5 MS may have TS0 allocated on the serving cell and TS1 allocated on the target cell, as if TS0 and TS1 were continuously allocated as shown in Figure 8b.

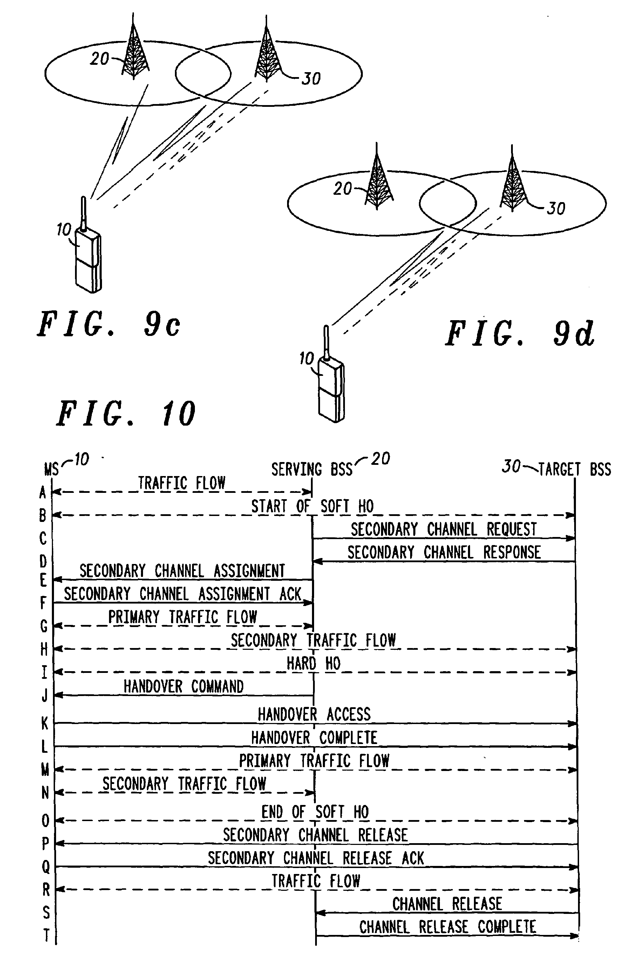

A handover method in accordance with an exemplary embodiment of the invention will now be described with reference to Figure 9. In accordance with the first embodiment of the present invention, a mobile station 10 in an existing call with the base station 20 of the serving cell 21 (Figure 9a) is communicating with the serving base station 20 using a partial rate channel (half rate channel or quarter rate channel) which carries both traffic and signalling information.

In the most preferred embodiment of the invention the existing channel is a partial rate channel, for example a half rate channel. However, the situation in which the existing channel is a full rate channel which is changed to a half rate channel at the start of the handover in accordance with this embodiment of the invention is also envisaged.

As the mobile station 10 approaches the cell boundary of the serving cell 21, a second partial rate channel (for example quarter rate channel or half rate channel) is set up with the base station 30 of the target cell 31 (Figure 9b). The new partial rate channel set up with the base station 30 of the target cell carries only traffic information.

As the mobile station 10 moves into the target cell 31 the signalling link is switched from the initially serving cell 21 to the target cell 31 (Figure 9c). Thus, the partial rate channel between the mobile station 10 and the base station 30 of the target cell now carries signalling and traffic information, and the partial rate channel between the mobile station 10 and the base station 20 of the initially serving cell carries only traffic information.

Finally, once the mobile station 10 moves further into the target cell 31 the partial rate channel between the mobile station 10 and the initially serving base station 20 is relinquished, and the handover is complete (Figure 9d).

The signalling and traffic flow between the mobile station 10, the serving base station 20 and the target base station 30 during the handover in accordance with the embodiment of the invention will now be described with reference to Figure 10.

With reference to Figure 10, initially the mobile station 10 is communicating with the serving base station 20 using a partial rate channel (half rate channel or quarter rate channel) which carries both traffic and signaling information (step A). This situation corresponds to the situation shown in Figure 9a. When a handover requirement is determined (step B) the serving base station 20 requests the target base station 30 to allocate a secondary channel to the mobile station 10 (step C). As indicated previously, in accordance with the exemplary embodiment of the invention the secondary channel allocated by the target base station 30 is a partial rate channel. This new partial rate secondary channel carries only traffic information: the signalling link is maintained with the initially serving base station 20.

Once the serving base station 20 receives the secondary channel request response from the target base station 30 (step D) the serving base station 20 informs the mobile station 10 of the secondary channel assignment ie the timeslot, frequency law and sub-channel number for the secondary channel (step E). The mobile station 10 acknowledges the secondary channel assignment to the serving base station 20 (step F). Thereafter the mobile station 10 exchanges traffic information with the serving base station 20 on the primary channel (step G) and exchanges traffic information with the target base station 30 on the secondary channel (step H). This situation is the same as that depicted in Figure 9b.

This situation may continue until the mobile station 10 moves into the target cell 31 and the signalling link is switched from the initially serving cell 21 to the target cell 31 as shown in Figure 1c. At the start of hard handover (step I), the serving base station 20 sends a handover command to the mobile station 10 (step J). In response to the handover command, the mobile station 10 sends a handover access request to the target base station 30 (step K) followed by a handover complete message (step L). At this point the signalling control link is moved from the originally serving base station 20 to the target base station 30. The mobile station 10 exchanges traffic information with the target base station 30 on the primary channel (step M) and exchanges traffic information with the originally serving base station 30 on the secondary channel (step N).

At the end of the handover (step O) the target base station sends a secondary channel release message to the mobile station (step P). On receipt of this message, the mobile station 10 acknowledges the secondary channel release (step Q) and releases the secondary channel (carrying traffic only) with the originally serving base station 20. Once the target base station 30 has received the secondary channel release acknowledgement, the target base station 30 informs the originally serving base station 20 of the channel release (step S). Once the secondary channel release acknowledgement is received from the originally serving base station (step T) the handover is complete. This corresponds to the situation in Figure 9d.

Of course, if a full rate channel is desired between the mobile station and the new serving base station 30 this can be achieved with conventional signaling and channel reassignment.

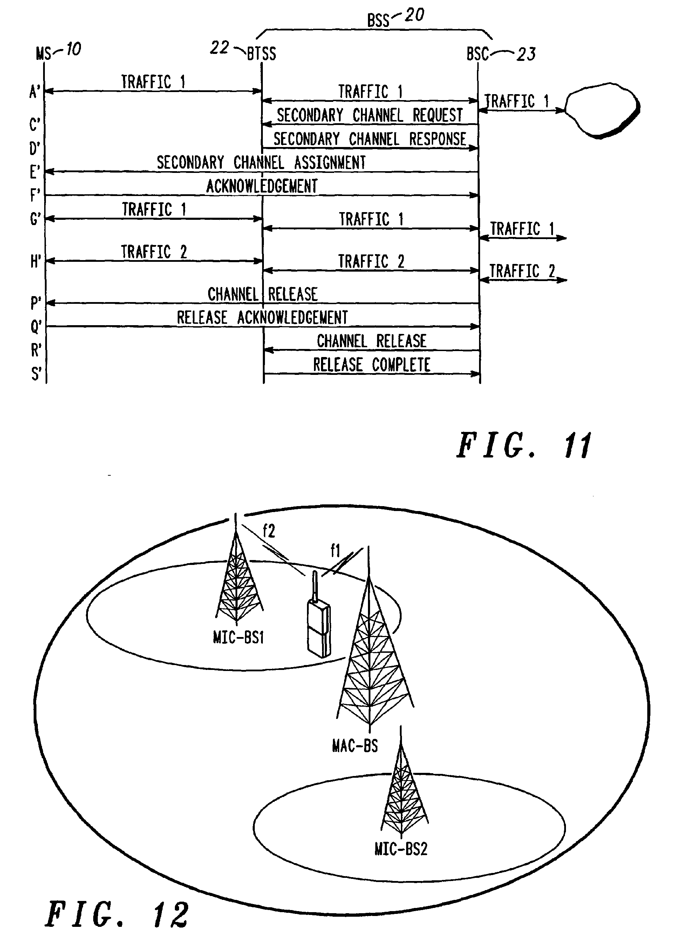

Although handover between a first base station 20 and a second base station 30 has been described, it is not necessary for the handover to occur between two base stations. In an alternative embodiment of the invention described with reference to Figure 11, an intra base-station handover can be achieved. In Figure 11 a mobile station 10 is in an established call with a serving base station 20, comprising a BTS 22 and a BSC 23.

Initially a primary traffic channel is established between the mobile station 10 and the BTS of the base station and this traffic information is routed through the BSC 23 to the network N (step A'). In order to perform an intra base station handover, the BSC23 requests a secondary channel assignment from the BTS 22 (stepC'). Once the BSC is notified of the secondary channel (step D') the BSC 23 informs the mobile station 10 of the secondary channel assignment (step E'). Once the secondary channel assignment has been cknowledged by the mobile station (step F'), the secondary traffic path to the network N is set up through the BTS 22 and the BSC 23 (step H') in addition to the existing primary traffic path (G').

In order to complete the intra base station handover, a channel release message is sent from the BSC 23 to the mobile station 10 (step P'). Once the mobile station acknowledges the channel release message (step Q') the BSC 23 informs the BTS 22 of the cannel release (step S'). Once the channel release is acknowledged, (step T') the intra-base station handover is complete.

Equally, although the establishment of the primary and secondary channels have been described in the context of a handover between one base station and another or in the context of intra-base station handover, in an alternative advantageous embodiment of the invention parallel primary and secondary channels may be established with one or more base stations during normal operation and not necessarily during a handover. The setting up of the primary and secondary channels in this situation is similar to that described above with reference to Figures 10 and 11, with the omission of the steps relating to the detection of a handover condition, the transfer of the signalling link from one base station to another (in the inter-base station handover situation described with reference to Figure 10) and the subsequent release of one of the channels.

The use of the invention is particularly advantageous in a hierarchical cell situation, in which, for example, the areas covered by several micro or pico-cells fall wholly or partly within the area covered by a macro-cell. Figure 12 shows such an arrangement, where the macro-cell is served by a macro-cell base station (MAC-BS) and a micro-cell is served by a micro-cell base station (MIC-BS1 and MIC-BS2). Problems in providing adequate coverage to a mobile station 10 in such situations is well known. A solution in accordance with an embodiment of the invention is to establish a partial rate link with the base station of the macro cell (MAC-BS) and a second partial rate link with the base station of the micro cell (MIC-BS1). As the mobile moves within the macro cell the partialrate link to the macro-cell base station (MAC-BS) is maintained and the partial rate channel to the base station of the micro cell (MIC-BS1) is handed over to the base station of another micro cell (MIC-BS2). Thus a traffic channel is always maintained with the macro-cell leading to improved performance of the system owing to the reduced likelihood that the call will be dropped as the mobile station moves between cells.

In addition, the allocation of two partial rate channels between a mobile station 10 and its serving base station provides useful frequency diversity. Allocation of one of the partial rate channels can be changed using the intra base station handover described above with reference to Figure 11 in order to select the optimum channel (with minimum interference) and so provide the best service to the mobile station.

In order to achieve space diversity as well as frequency diversity, a base station and associated relay, such as shown in Figure 12 may advantageously be used.

Thus, aspects of the present invention provide channel/frequency diversity as well as space diversity provide improved quality, in particular during handover as no speech samples will be lost. Capacity gains can be realised from using two HR or QR channels instead of one FR channel under medium or bad radio conditions. The vunerability of these channels will be compensated by the double path towards two cells.

## Claims

1. A method of operation of a radio communication device (10) in a radio communication system, the radio communication system comprising at least one base station communicating with the radio communication device over radio communication channels, the method comprising using a TDMA partial rate primary channel (f1) carrying traffic and signalling information and at least one TDMA partial rate secondary channel (f2) carrying traffic information only, wherein the primary channel (f1) and the secondary channel (f2) carry the same traffic information and are complementary channels which are allocated to different frames.

2. A method of operation of a communication device as claimed in claim 1 wherein the TDMA partial rate channels are half rate channels or quarter rate channels.

3. A method of operation of a communication device as claimed in claim 1 wherein the primary and the secondary channels are allocated to alternate frames, or on a four frames basis or a half-multiframe basis or a whole multiframe basis.

4. A method of operation of a communication device (10) as claimed in claim 1, 2 or 3 further comprising the step of performing a handover of the radio communication device (10) from a first transceiver means (BTS1) to a second transceiver means (BTS2) in a radio communication system, wherein the TDMA partial rate primary channel (f1) carrying traffic and signalling information exists between the radio communication device (10) and the first transceiver means, the handover method comprising the steps of: establishing the TDMA partial rate secondary channel (f2) between the radio communication device (10) and the second transceiver means containing traffic information only; moving the signalling information from the TDMA partial rate primary channel (f1) to the TDMA partial rate secondary channel (f2); and releasing the TDMA partial rate primary channel (f1) between the radio communication device (10) and the first transceiver means.

5. A method of performing a handover of a radio communication device as claimed in claim 4 wherein the first transceiver means is part of a first base station (20) and the second transceiver means is part of either the first base station (20) or a second base station (30).

6. A method of operation of a radio communication device (10) as claimed in any one of claims 1-3, the method further comprising the steps of: receiving traffic information on the primary channel (f1) and obtaining first data therefrom; receiving traffic information on the secondary channel (f2) and obtaining second data therefrom; soft combining at least a portion of the data received on the primary channel (f1) and the data received on the secondary channel (f2) to obtain third data; and decoding the obtained third data.

7. A control means in a radio communication system comprising at least one base station and a radio communication device, for controlling communication between the radio communication device (10) and the at least one base station over radio communication channels, the control means being adapted to use a TDMA partial rate primary channel (f1) carrying traffic and signalling information and a TDMA partial rate secondary channel (f2) carrying traffic information only, and wherein the primary channel and the secondary channel carry the same traffic information and are complementary channels which are allocated to different frames.

8. A control means in a communication system as claimed in claim 7 wherein the TDMA partial rate channels are half rate channels or quarter rate channels.

9. A control means in a communication system as claimed in claim 7 wherein the primary and the secondary channels are allocated to alternate frames, or on a four frames basis or a half-multiframe basis or a whole multiframe basis.

10. A radio communication system including first (BTS1) and second (BTS2) transceiver means and a control means (BSC) as claimed in any one of claims 7-9, wherein the control means (BSC) is arranged to control communication with the radio communication device using the TDMA partial rate primary channel via the first transceiver means (BTS1) and to control communication with the radio communication device using the TDMA partial rate secondary channel via the second transceiver means (BTS2).

11. A radio communication system as claimed in claim 10 further comprising a first base station (20), wherein the first transceiver means (BTS1) and second transceiver means (BTS2) are first and second transceivers of the first base station (20) and the control means is the associated Base Station Controller (BSC).

12. A radio communication system as claimed in claim 10 further comprising a first base station (20) and a second base station (30), wherein the first transceiver means is part of the first base station (20) and the second transceiver means is part of the second base station (30) and the control means is the BSC (BSC1) associated with the first base station (20).

13. A radio communication system as claimed in claim 12 wherein the second base station (30) has a second BSC (BSC2) associated therewith, the BSC (BSC1) associated with the first base station (20) exchanges signalling information with the second base station (30) via the BSC (BSC2) associated with the second base station (30).

14. A radio communication system as claimed in claim 12 or 13 wherein the two different base stations (20, 30) are at different levels in a hierarchical system arrangement.

15. A radio communication device (10) adapted to perform the method steps of any one of claims 1-6 performed by the radio communication device (10).

## Patentansprüche

1. Verfahren zum Betreiben einer Funkkommunikationsvorrichtung (10) in einem Funkkommunikationssystem, wobei das Funkkommunikationssystem mindestens eine Basisstation aufweist, die mit der Funkkommunikationsvorrichtung über Funkkommunikationskanäle kommuniziert, wobei das Verfahren den Schritt der Verwendung eines primären TDMA-Teilkanals (f1), welcher Verkehrs- und Signalisierungsinformationen überträgt, und mindestens eines sekundären TDMA-Teilkanals (f2) aufweist, welcher nur Verkehrsinformationen überträgt, **dadurch gekennzeichnet, dass** der primäre Kanal (f1) und der sekundäre Kanal (f2) dieselben Verkehrsinformationen übertragen und komplementäre Kanäle sind, die unterschiedlichen Frames zugeordnet sind.

2. Verfahren zum Betreiben einer Kommunikationsvorrichtung nach Anspruch 1, **dadurch gekennzeichnet, dass** die TDMA-Teilkanäle Half-Rate-Kanäle (Verkehrskanäle mit halber Bitrate) oder Quarter-Rate-Kanäle (Verkehrskanäle mit gevierteilter Bitrate) sind.

3. Verfahren zum Betreiben einer Kommunikationsvorrichtung nach Anspruch 1, **dadurch gekennzeichnet, dass** die primären und sekundären Kanäle wechselnden Frames zugeordnet sind, oder auf der Basis von vier Frames oder der Basis eines halben Multiframe oder auf der Basis eines ganzen Multiframe.

4. Verfahren zum Betreiben einer Kommunikationsvorrichtung (10) nach Anspruch 1, 2 oder 3, welches weiter den Schritt der Ausführung eines Kanalwechsels der Funkkommunikationsvorrichtung (10) von einer ersten Transceiver-Vorrichtung (BTS1) zu einer zweiten Transceiver-Vorrichtung (BTS2) in einem Funkkommunikationssystem aufweist, **dadurch gekennzeichnet, dass** der primäre TDMA-Teilkanal (f1), welcher Verkehrs- und Signalisierungsinformationen überträgt, zwischen der Funkkommunikationsvorrichtung (10) und der ersten Transceiver-Vorrichtung vorhanden ist, wobei das Kanalwechselverfahren die folgenden Schritte aufweist: Einrichten des sekundären TDMA-Teilkanals (f2) zwischen der Funkkommunikationsvorrichtung (10) und der zweiten Transceiver-Vorrichtung, welche nur Verkehrsinformationen enthält; Verschieben der Signalisierungsinformationen von dem primären TDMA-Teilkanal (f1) zu dem sekundären TDMA-Teilkanal (f2); und Freigeben des primären TDMA-Teilkanals (f1) zwischen der Funkkommunikationsvorrichtung (10) und der ersten Transceiver-Vorrichtung.

5. Verfahren zur Durchführung eines Kanalwechsels einer Funkkommunikationsvorrichtung nach Anspruch 4, **dadurch gekennzeichnet, dass** die erste Transceiver-Vorrichtung Teil einer ersten Basisstation (20) ist und dass die zweite Transceiver-Vorrichtung entweder Teil der ersten Basisstation (20) oder einer zweiten Basisstation (30) ist.

6. Verfahren zum Betreiben einer Funkkommunikationsvorrichtung (10) nach einem der Ansprüche 1 bis 3, wobei das Verfahren weiter die folgenden Schritte aufweist: Empfang von Verkehrsinformationen auf dem primären Kanal (f1) und Erhalt erster Daten davon; Empfang von Verkehrsinformationen auf dem sekundären Kanal (f2) und Erhalt zweiter Daten davon; weiches Kombinieren zumindest eines Anteils der auf dem primären Kanal (f1) empfangenen Daten und der Daten, die auf dem sekundären Kanal (f2) empfangen werden, zum Erhalt dritter Daten; und Decodieren der erhaltenen dritten Daten.

7. Steuervorrichtung in einem Funkkommunikationssystem, welches mindestens eine Basisstation und eine Funkkommunikationsvorrichtung aufweist, zur Steuerung einer Kommunikation zwischen der Funkkommunikationsvorrichtung (10) und der mindestens einen Basisstation über Funkkommunikationskanäle, wobei die Steuervorrichtung derart ausgelegt ist, dass sie einen primären TDMA-Teilkanal (f1), welcher Verkehrs- und Signalisierungsinformationen überträgt, und einen sekundären TDMA-Teilkanal (f2), welcher nur Verkehrsinformationen überträgt, verwendet, und **dadurch gekennzeichnet ist, dass** der primäre Kanal und der sekundäre Kanal dieselben Verkehrsinformationen übertragen und komplementäre Kanäle sind, die unterschiedlichen Frames zugeordnet sind.

8. Steuervorrichtung in einem Kommunikationssystem nach Anspruch 7, **dadurch gekennzeichnet, dass** die TDMA-Teilkanäle Half-Rate-Kanäle oder Quarter-Rate-Kanäle sind.

9. Steuervorrichtung in einem Kommunikationssystem nach Anspruch 7, **dadurch gekennzeichnet, dass** der primäre und sekundäre Kanal wechselnden Frames zugeordnet sind, oder auf der Basis von vier Frames oder auf der Basis eines halben Multiframe oder auf der Basis eines ganzen Multiframe.

10. Funkkommunikationssystem mit einer ersten (BTS1) und einer zweiten (BTS2) Transceiver-Vorrichtung sowie einer Steuervorrichtung (BSC) nach einem der Ansprüche 7 bis 9, **dadurch gekennzeichnet, dass** die Steuervorrichtung (BSC) so angeordnet ist, dass sie die Kommunikation mit der Funkkommunikationsvorrichtung unter Verwendung des primären TDMA-Teilkanals über die erste Transceiver-Vorrichtung (BTS1) steuert, und die Kommunikation mit der Funkkommunikationsvorrichtung unter Verwendung des sekundären TDMA-Teilkanals über die zweite Transceiver-Vorrichtung (BTS2) steuert.

11. Funkkommunikationssystem nach Anspruch 10, welches des Weiteren eine erste Basisstation (20) aufweist, **dadurch gekennzeichnet, dass** die erste Transceiver-Vorrichtung (BTS1) und die zweite Transceiver-Vorrichtung (BTS2) erste und zweite Transceiver der ersten Basisstation (20) sind und die Steuervorrichtung die damit verbundene Basisstations-Steuervorrichtung (BSC) ist.

12. Funkkommunikationssystem nach Anspruch 10, welches des Weiteren eine erste Basisstation (20) und eine zweite Basisstation (30) aufweist, **dadurch gekennzeichnet, dass** die erste Tansceiver-Vorrichtung Teil der ersten Basisstation (20) ist und die zweite Transceiver-Vorrichtung Teil der zweiten Basisstation (30) ist, und dass die Steuervorrichtung die BSC (BSC1) darstellt, die mit der ersten Basisstation (20) verbunden ist.

13. Funkkommunikationssystem nach Anspruch 12, **dadurch gekennzeichnet, dass** die zweite Basisstation (30) eine damit verbundene zweite BSC (BSC2) aufweist, wobei die mit der ersten Basisstation (20) verbundene BSC (BSC1) Signalisierungsinformationen über die mit der zweiten Basisstation (30) verbundene BSC (BSC2) mit der zweiten Basisstation (30) austauscht.

14. Funkkommunikationssystem nach Anspruch 12 oder 13, **dadurch gekennzeichnet, dass** die beiden unterschiedlichen Basisstationen (20, 30) auf unterschiedlichen Ebenen in einer hierarchischen Systemanordnung angeordnet sind.

15. Funkkommunikationsvorrichtung (10), welche so ausgelegt ist, dass sie die von der Funkkommunikationsvorrichtung (10) ausgeführten Verfahrensschritte nach einem beliebigen der Ansprüche 1 bis 6 ausführt.

## Revendications

1. Procédé de fonctionnement d'un dispositif de radiocommunication (10) dans un système de radiocommunication, le système de radiocommunication comprenant au moins une station de base communiquant avec le dispositif de radiocommunication sur des canaux de radiocommunication, le procédé consistant à utiliser un canal principal à taux partiel TDMA (f1) portant les informations de trafic et de signalisation et au moins un canal secondaire à débit partiel TDMA (f2) portant uniquement les informations de trafic, dans lequel le canal principal (f1) et le canal secondaire (f2) portent les mêmes informations de trafic et sont des canaux complémentaires qui sont alloués à différentes trames.

2. Procédé de fonctionnement d'un dispositif de communication selon la revendication 1, dans lequel les canaux à débit partiel TDMA sont des canaux à demi-débit ou des canaux à quart de débit.

3. Procédé de fonctionnement d'un dispositif de communication selon la revendication 1, dans lequel les canaux principal et secondaire sont alloués à des trames secondaires, ou sur une base de quatre trames ou une base de demi-multitrame ou une base de multitrame complète.

4. Procédé de fonctionnement d'un dispositif de communication (10) selon la revendication 1, 2 ou 3, comprenant en outre l'étape consistant à effectuer un transfert du dispositif de radiocommunication (10) d'un premier moyen émetteur-récepteur (BTS1) vers un second moyen émetteur-récepteur (BTS2) dans un système de radiocommunication, dans lequel le canal principal à débit partiel TDMA (f1) portant des informations de trafic et de signalisation existe entre le dispositif de radiocommunication (10) et le premier moyen émetteur-récepteur, le procédé de transfert comprenant les étapes consistant à: établir le canal secondaire à débit partiel TDMA (f2) entre le dispositif de radiocommunication (10) et le second moyen émetteur-récepteur contenant uniquement des informations de trafic; déplacer les informations de signalisation du canal principal à débit partiel TDMA (f1) vers le canal secondaire à débit partiel TDMA (f2); et libérer le canal principal à débit partiel TDMA (f1) entre le dispositif de radiocommunication (10) et le premier moyen émetteur-récepteur.

5. Procédé consistant à réaliser un transfert d'un dispositif de radiocommunication selon la revendication 4, dans lequel le premier moyen émetteur-récepteur fait partie d'une première station de base (20) et le second moyen émetteur-récepteur fait partie de l'une ou l'autre de la première station de base (20) ou d'une seconde station de base (30).

6. Procédé de fonctionnement d'un dispositif de radiocommunication (10) selon l'une quelconque des revendications 1 à 3, le procédé comprenant en outre les étapes consistant à: recevoir des informations de trafic sur le canal principal (f1) et obtenir des premières données à partir de celles-ci; recevoir des informations de trafic sur le canal secondaire (f2) et obtenir des secondes données à partir de celles-ci; combiner de façon souple au moins une partie des données reçues sur le canal principal (f1) et des données reçues sur le canal secondaire (f2) pour obtenir des troisièmes données; et décoder les troisièmes données obtenues.

7. Moyen de contrôle dans un système de radiocommunication comprenant au moins une station de base et un dispositif de radiocommunication, pour contrôler la communication entre le dispositif de radiocommunication (10) et l'au moins une station de base sur les canaux de radiocommunication, le moyen de contrôle étant adapté pour utiliser un canal principal à débit partiel TDMA (f1) portant des informations de trafic et de signalisation et un canal secondaire à débit partiel TDMA (f2) portant uniquement des informations de trafic, et dans lequel le canal principal et le canal secondaire portent les mêmes informations de trafic et sont des canaux complémentaires qui sont alloués à différentes trames.

8. Moyen de contrôle dans un système de communication selon la revendication 7, dans lequel les canaux à débit partiel TDMA sont des canaux à demi-débit ou des canaux à quart de débit.

9. Moyen de contrôle dans un système de communication selon la revendication 7, dans lequel les canaux principal et secondaire sont alloués à des trames secondaires, ou sur une base de quatre trames ou une base de demi-multitrame ou une base de multitrame complète.

10. Système de radiocommunication comprenant un premier (BTS1) et un second (BTS2) moyen émetteur-récepteur et un moyen de contrôle (BSC) selon l'une quelconque des revendications 7-9, dans lequel le moyen de contrôle (BSC) est agencé pour contrôler la communication avec le dispositif de radiocommunication utilisant le canal principal à débit partiel TDMA via le premier moyen émetteur-récepteur (BTS1) et pour contrôler la communication avec le dispositif de radiocommunication utilisant le canal secondaire à débit partiel TDMA via le second moyen émetteur-récepteur (BTS2).

11. Système de radiocommunication selon la revendication 10, comprenant en outre une première station de base (20), dans lequel le premier moyen émetteur-récepteur (BTS1) et le second moyen émetteur-récepteur (BTS2) sont un premier et un second émetteurs-récepteurs de la première station de base (20) et le moyen de contrôle est le contrôleur de station de base (BSC) associé.

12. Système de radiocommunication selon la revendication 10, comprenant en outre une première station de base (20) et une seconde station de base (30), dans lequel le premier moyen émetteur-récepteur fait partie de la première station de base (20) et le second moyen émetteur récepteur fait partie de la seconde station de base (30) et le moyen de contrôle est le BSC (BSC1) associé à la première station de base (20).

13. Système de radiocommunication selon la revendication 12, dans lequel la seconde station de base (30) a un second BSC (BSC2) associé à celle-ci, le BSC (BSC1) associé à la première station de base (20) échange des informations de signalisation avec la seconde station de base (30) via le BSC (BSC2) associé à la seconde station de base (30).

14. Système de radiocommunication selon la revendication 12 ou 13, dans lequel les deux stations de base différentes (20, 30) sont à des niveaux différents dans un agencement de système hiérarchique.

15. Dispositif de radiocommunication (10) adapté pour effectuer les étapes de procédé de l'une quelconque des revendications 1 à 6 effectuées par le dispositif de radiocommunication (10).
